# EUROPEAN PATENT SPECIFICATION

(11) **EP 0 530 580 B1**
(45) Date of publication and mention of the grant of the patent: **11.10.1995**
(21) Application number: 92114023.2
(22) Date of filing: 18.08.1992
(51) Int. Cl.: G01P 3/44, G01P 3/48

(54) **A flux concentrator for gauging the revolving speed between two members in relative rotation**
Fluxkonzentriervorrichtung zur Messung der relativen Drehzahl zwischen zwei Bauteilen
Concentrateur de flux pour mesurer la vitesse relative entre deux corps en rotation

(30) Priority: 04.09.1991 IT TO910202 U
(43) Date of publication of application: 10.03.1993
(73) Proprietor: SKF INDUSTRIE S.P.A., I-10123 Torino (IT)
(72) Inventor: Vignotto, Angelo, I-10134 Torino (IT); Forestiero, Paolo, I-10060 Airasca (TO) (IT)
(74) Representative: Lotti, Giorgio

(56) References cited:
- EP-A- 0 053 894
- DE-U- 9 010 131
- US-A- 3 500 091

## Description

The present invention lies in the field of the devices for gauging the revolving speed between two members in relative rotation, such as the supporting members of a vehicle wheel. The invention relates more particularly to a flux concentrator inside which a coil is wound for gauging the revolving speed.

At present, control circuits known as ABS, ASR, TDWS, are usually fitted with common basic components, such as a phonic wheel, a gauging sensor, a local processing unit and an oleodynamic shunt connection unit.

The phonic wheel is usually a toothed ring that is mounted on the rotating part to be kept under control, while the sensor is installed on a fixed portion of the chassis facing the toothed part of the phonic wheel at a prearranged distance.

The electric signals coming from the single sensors are sent to the local processing unit that gauges, in the case of ABS systems, the differences between the revolving speeds of the wheels.

In this particular case, the sensor is formed by a coil (passive sensor) comprising a number of windings disposed inside a special device, the flux concentrator. The phonic wheel is a multipolar magnetized ring.

Of course flux concentrators are in themselves well known. Examples of such concentrators are rings made out of a rigid material which are mounted onto the fixed race of a bearing. These concentrators usually have a C shaped cross section, wherein the sensor coil is contained, and an edge so modelled as to allow the restraint to the bearing. Further, concentrators must have a series of radially disposed openings which are usually obtained in an edge of the C shaped section so as to allow the passage of the magnetic lines of force, that would otherwise be shortcircuited.

From a constructional point of view, the operation of punching the edge where the openings have to be created (to give the device a comb-like outline) is quite impractical, because this operation is carried out on a ring with a C shaped cross section. Therefore, the ring is easily subject to accidental deformations.

Another problem concerning flux concentrators is related to the axial dimension, which has to be reduced to a minimum so as to prevent from interference with the nearby mechanical components.

It is an object of the present invention to provide a device that is capable of overcoming and resolving the aforementioned drawbacks and problems, providing a flux concentrator which has a shape that is well suited for producing the openings between the teeth without involving delicate and therefore slow and costly operations.

Another object of the present invention is to provide a concentrator with a minimum axial dimension and a reduced radial overall dimension, capable of being mounted around the bearing instead of facing it axially.

In accordance with one aspect of the invention as claimed, these objects are accomplished by the provision of a flux concentrator for gauging the revolving speed between two members in relative rotation, of the kind made out of a toothed ring with an open shaped axial cross section, provided with an edge designed to allow mounting to a rolling bearing and a pocket for containing a sensor coil; characterised in that the flux concentrator extends from the non-rotating race of the bearing to the rotating race where it forms said pocket with a surface of said race; a phonic wheel facing the coil being mounted on the same surface of the rotating race; the flux concentrator having a substantially L shaped axial cross section in correspondence of said pocket, determining the pocket by means of a radially disposed flat wall and an axially disposed cylindrical wall in which a series of apertures are obtained so as to form a series of teeth on the concentrator.

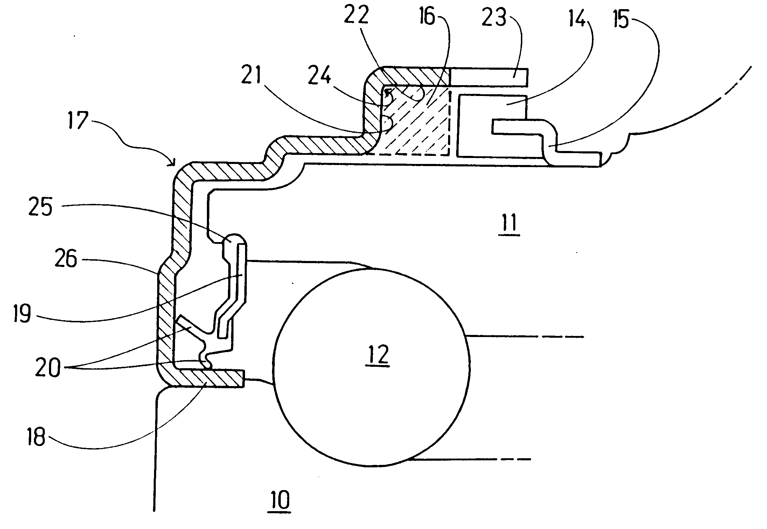

The accompanying drawing illustrates one complete example of the physical embodiment of the invention constructed according to the best mode so far devised for the practical application of the principles thereof, in which the figure is an axial sectional view of a vehicle wheel bearing on which a flux concentrator of this invention is mounted.

Referring to the drawing, the numeral 10 designates the inner non revolving race, numeral 11 the revolving outer race and numeral 12 the balls of a rolling contact bearing.

A revolving speed gauging device is externally mounted on the bearing and coaxially disposed with respect thereto. Such device comprises a phonic wheel 14 which is fitted on the outer revolving race 11 by means of a supporting shield 15 and a sensor coil 16 facing the phonic wheel 14. The coil 16 is disposed inside a flux concentrator 17 which is in turn attached to the inner fixed race 10 of the bearing.

The flux concentrator 17 is a toothed ring having an open shaped axial cross section so as to allow an edge 18 thereof to be force fitted to the non revolving inner race 10. Mounted on the outer race 11 is a protection shield 19 which carries a seal 25 with a pair of outwardly projecting lips 20. These lips are made to slide on the inner walls of the flux concentrator to prevent particles from entering the bearing.

Following the contour of the bearing, the flux concentrator surrounds the outer race 11 and forms a pocket 24 in which the sensor coil 16 is located. The pocket 24 is determined by a radially disposed flat wall 21 and an axially disposed cylindrical wall 22, which give to pocket 24 a characteristic L shaped cross section. A series of apertures are obtained in the cylindrical wall 22 so as to determine a series of teeth 23 on the concentrator.

As is apparent from the figure, the teeth 23 are disposed close to the outer periphery of the phonic wheel 14. Traditional flux concentrators are so folded to contain the phonic wheel and the coil not only on the outer part but also on the inner part. In this case it is the outer surface of the race 11 that exploits the necessary function of containing the innermost parts of the phonic wheel and of the coil.

A flux concentrator as the one herein described allows to hold the gauging coil in a L shaped seat instead of a C shaped seat as in prior art.

Moreover, the flux according to this invention allows to fit the gauging device radially rather than placing it side by side to the bearing. Therefore, the overall axial dimensions are reduced. As shown in the drawing, the front portion 26 of the concentrator is level with respect to the front surface of the bearing 10.

The teeth 23 of the concentrator may be obtained by a very simple punching operation, with constructional facilitations and economical advantages.

## Claims

1. A flux concentrator (17) for gauging the revolving speed between two members in relative rotation, of the kind made out of a toothed ring with an open shaped axial cross section, provided with an edge (18) designed to allow mounting to a rolling bearing (10) and a pocket (24) for containing a sensor coil (16); characterised in that the flux concentrator (17) extends from the non-rotating race (10) of the bearing to the rotating race (11) where it forms said pocket (24) with a surface of said rotating race (11); a phonic wheel (14) facing the coil (16) being mounted on the same surface of the rotating race (11); the flux concentrator (17) having a substantially L shaped axial cross section in correspondence of said pocket (24), determining the pocket by means of a radially disposed flat wall (21) and an axially disposed cylindrical wall (22) in which a series of apertures are obtained so as to form a series of teeth (23) on the concentrator (17).

2. A flux concentrator according to claim 1, characterised in that the concentrator (17) has an open shaped axial cross section with the front portion (26) thereof disposed level with respect to the front surface of the bearing.

3. A flux concentrator according to claim 1, characterised in that said pocket (24) is coaxially disposed with respect to the rolling bearing so as to surround the outer part thereof (11).

## Patentansprüche

1. Flußkonzentrator (17) zum Messen der Drehgeschwindigkeit zwischen zwei relativ zueinander rotierenden Bauteilen, des Typs, der aus einem gezahnten Ring hergestellt ist, mit einem offenkonturigen, axialen Querschnitt, der mit einem Rand (18) versehen ist, der dafür vorgesehen ist, um ein Befestigen an einem Kugellager (10) zu ermöglichen, und der mit einer Tasche (24) zur Aufnahme einer Sensorspule (16) versehen ist; dadurch gekennzeichnet, daß der Flußkonzentrator (17) sich von dem nicht rotierenden Lagerring (10) des Lagers bis zum rotierenden Lagerring (11) erstreckt, bei dem dieser die Tasche (24) mit einer Fläche des rotierenden Lagerringes (11) bildet; daß ein phonisches Rad (14) der Spule (16) gegenüberliegt, die auf derselben Fläche des rotierenden Lagerringes (11) befestigt ist; daß der Flußkonzentrator (17) einen im wesentlichen L-förmigen axialen Querschnitt in Übereinstimmung mit der Tasche (24) aufweist, wobei die Tasche mittels einer radial angeordneten, flachen Wand (21) und einer axial angeordneten, zylindrischen Wand (22) bestimmt ist, in denen eine Reihe von Öffnungen so vorgesehen sind, daß sie eine Reihe von Zähnen (23) auf dem Flußkonzentrator (17) bilden.

2. Flußkonzentrator nach Anspruch 1, dadurch gekennzeichnet, daß der Flußkonzentrator (17) einen offenkonturigen, axialen Querschnitt aufweist, wobei dessen Vorderabschnitt (26) in gleicher Höhe in Bezug auf die Stirnseite des Lagers angeordnet ist.

3. Flußkonzentrator nach Anspruch 1, dadurch gekennzeichnet, daß die Tasche (24) koaxial bezüglich des Kugellagers angeordnet ist, um so dessen äußeren Teil (11) zu umschließen.

## Revendications

1. Concentrateur de flux (17) destiné à mesurer la vitesse de rotation entre deux éléments en rotation relative, du type composé d'un anneau denté ayant une section axiale de forme ouverte, muni d'un bord (18) agencé pour permettre le montage sur un palier à roulement (10), et d'une poche (24) destinée à loger une bobine de capteur (16), caractérisé en ce que le concentrateur de flux (17) s'étend de la bague non tournante (10) du palier à la bague tournante (11) où il forme ladite poche (24) avec une surface de ladite bague tournante (11) ; une roue phonique (14) faisant face à la bobine (16) étant montée sur la même surface de la bague non tournante (11) ; ledit concentrateur de flux (17) ayant en outre une section axiale sensiblement en forme de L au niveau de ladite poche (24), en définissant cette poche au moyen d'une paroi plate (21) disposée radialement et d'une paroi cylindrique (22) disposée axialement et dans laquelle une série d'ouvertures sont ménagées de manière à former une série de dents (23) sur le concentrateur (17).

2. Concentrateur de flux selon la revendication 1, caractérisé en ce que le concentrateur (17) a une section axiale de forme ouverte comportant une partie avant (26) disposée dans le même plan que la surface avant du palier.

3. Concentrateur de flux selon la revendication 1, caractérisé en ce que ladite poche (24) est disposée coaxialement par rapport au palier à roulement, de manière à entourer la partie extérieure (11) de ce palier.
